# EUROPÄISCHE PATENTSCHRIFT

(11) **EP 3 234 512 B1**
(45) Veröffentlichungstag und Bekanntmachung des Hinweises auf die Patenterteilung: **10.11.2021**
(21) Anmeldenummer: 15797080.7
(22) Anmeldetag: 18.11.2015
(51) Int. Cl.: G01F 1/36, G01F 1/40, G01F 25/00, G01F 1/42

(54) **DURCHFLUSSMESSANORDNUNG NACH DEM DIFFERENZDRUCKMESSPRINZIP**
DIFFERENTIAL PRESSURE TYPE FLOWMETER
DÉBITMÈTRE À PRESSION DIFFÉRENTIELLE

(30) Priorität: 19.12.2014 DE 102014119240
(43) Veröffentlichungstag der Anmeldung: 25.10.2017
(73) Patentinhaber: Endress+Hauser SE+Co. KG, 79689 Maulburg (DE)
(72) Erfinder: JEHLE, Max, 66773 Schwalbach (DE); PARROTTO, Davide, 79576 Weil am Rhein (DE)
(74) Vertreter: Andres, Angelika Maria
(86) Internationale Anmeldenummer: PCT/EP2015/076902
(87) Internationale Veröffentlichungsnummer: WO 2016/096296

(56) Entgegenhaltungen:
- US-A- 5 680 109
- US-A1- 2004 249 583
- US-A1- 2006 277 000

## Beschreibung

Die vorliegende Erfindung betrifft eine Durchflussmessanordnung nach dem Differenzdruckmessprinzip mit einer Hoch- und Niederdruckleitung und ein Verfahren zum Erkennen einer verstopften Hoch- oder Niederdruckleitung. Durchflussmessanordnungen nach dem Differenzdruckmessprinzip mit Hoch- und Niederdruckleitungen dienen insbesondere zur Durchflussmessung oder Filterüberwachung, wobei die Hoch- und Niederdruckleitung in Strömungsrichtung oberhalb und unterhalb eines Wirkdruckgebers, beispielsweise einer Blende oder einer Venturi Düse, oder eines Filters an eine medienführende Leitung angeschlossen sind, um den Wirkdruck mittels des Mediums zu einem Differenzdruckmesswandler der Durchflussmessanordnung zu übertragen. Beim Betrieb dieser Messanordnungen kann es zu Verstopfungen der Hoch- und/oder Niederdruckleitung kommen, wodurch eine zuverlässige Messung beeinträchtigt wird. Es sind daher Bemühungen bekannt, die Verstopfung von Hoch- und Niederdruckleitung frühzeitig zu erkennen.

US 5,680,109 A beschreibt einen Differenzdrucksensor, der eine Hochdruckimpulsleitung und eine Niederdruckimpulsleitung aufweist, die jeweils an einem Prozessanschluss angeschlossen sind. An der Hochdruckimpulsleitung und Niederdruckimpulsleitung ist jeweils ein Absolutdrucksensor angeschlossen. Um festzustellen, ob die Hochdruckimpulsleitung oder die Niederdruckimpulsleitung blockiert ist, wird ein Rauschsignal aus dem entsprechenden Absolutdrucksensor ermittelt. Eine Varianz des Rauschsignals wird bestimmt und mit einem Schwellenwert verglichen. Wenn die Varianz kleiner als der Schwellenwert ist, wird eine Impulsleitungsblockierung angegeben.

Der obige Ansatz, Fluktuationen zu analysieren, ist an sich zielführend, ist jedoch sehr aufwändig, da zusätzliche Sensoren erforderlich sind.

US 2004/249583 A1 offenbart eine Durchflussmessanordnung, bei der die Auswertung des Leistungsspektrums eines Differenzdruckmesssignals zur Erkennung einer Verstopfung der Druckleitung verwendet wird. US 2006/277000 A1 offenbart eine Durchflussmessanordnung mit einer Auswerteeinheit, die einen Zusammenhang zwischen einem Differenzdruckmesssignal und einem Rauschen des Differenzdruckmesssignals zur Erkennung einer Verstopfung der Druckleitung heranzieht.

Es ist daher die Aufgabe der vorliegenden Erfindung eine Durchflussmessanordnung nach dem Differenzdruckmessprinzip und ein Verfahren bereitzustellen, welche es ermöglichen einfacher zu erkennen, ob die Hochdruckleitung oder die Niederdruckleitung verstopft ist. Die Aufgabe wird erfindungsgemäß gelöst durch die Durchflussmessanordnung gemäß Patentanspruch 1 und das Verfahren gemäß Patentanspruch 4.

Die erfindungsgemäße Durchflussmessanordnung zur Messung eines Durchflusses eines Mediums durch ein Messrohr, umfasst mindestens einen im Messrohr befindlichen Wirkdruckgeber, der insbesondere eine Reduzierung einer vom Medium durchströmten Querschnittsfläche im Inneren des Messrohrs im Bereich des Wirkdruckgebers und damit ein von den Abmessungen des Wirkdruckgebers und vom Durchfluss abhängiges Gefälle des Mediendrucks bewirkt,
einen Differenzdruckmesswandler zum Erfassen einer Differenz zwischen einem hochdruckseitigen Mediendruck und einem niederdruckseitigen Mediendruck und zum Bereitstellen eines Differenzdruckmesssignals, welches von der Differenz zwischen dem hochdruckseitigen Mediendruck und dem niederdruckseitigen Mediendruck abhängt, wobei die Differenz zwischen dem hochdruckseitigen Mediendruck und dem niederdruckseitigen Mediendruck ein Maß für den Durchfluss des Mediums ist,
eine Hochdruckleitung, welche an einen Hochdruckeingang des Differenzdruckmesswandlers angeschlossen ist, um den Differenzdruckmesswandler mit dem hochdruckseitigen Mediendruck zu beaufschlagen,
eine Niederdruckleitung, welche an einen Niederdruckeingang des Differenzdruckmesswandlers angeschlossen ist um den Differenzdruckmesswandler mit dem niederdruckseitigen Mediendruck zu beaufschlagen,
eine Auswerteeinheit zum Auswerten des Differenzdruckmesssignals,
wobei die Auswerteeinheit dazu eingerichtet ist,
   - eine Relation zwischen dem Differenzdruckmesssignal und einem charakteristischen Parameter eines Rauschens oder einer Fluktuation des Differenzdruckmesssignals festzustellen,
   - die Feststellung einer monoton fallenden Relation zwischen dem Differenzdruckmesssignal und dem charakteristischen Parameter als Hinweis auf eine verstopfte Hochdruckleitung zu werten, und
   - die Feststellung einer monoton steigenden Relation zwischen dem Differenzdruckmesssignal und dem charakteristischen Parameter, dessen monoton steigende Relation signifikant stärker ist als die monoton steigende Relation zwischen dem Differenzdruckmesssignal (22) und dem charakteristischen Parameter bei einer unverstopften Durchflussmessanordnung, als Hinweis auf eine verstopfte Niederdruckleitung zu werten.

Für die Entscheidung, ob die Hoch- oder die Niederdruckleitung verstopft ist, wird das Rauschen bzw. Fluktuation als Funktion des Differenzdruckmesssignals betrachtet. Weist die Funktion einen negativen Linearkoeffizienten auf, dann ist die Hochdruckleitung verstopft. Weist dagegen die Funktion einen signifikant größeren Linearkoeffizienten auf, als die Funktion einer nicht verstopften Durchflussmessanordnung, dann ist die Niederdruckleitung verstopft. Die Erkennung einer Verstopfung mittels der erfindungsgemäßen Durchflussmessanordnung ist insbesondere bei sehr dynamischen Prozessen vorteilhaft.

In einer alternativen Ausgestaltung der Erfindung ist die monoton steigende bzw. fallende Relation zwischen dem Differenzdruckmesssignal und dem charakteristischen Parameter näherungsweise durch eine linear steigende bzw. fallende Funktion modelliert, wobei die signifikant stärker monoton steigende Relation, eine näherungsweise linear steigende Funktion ist, deren Linearkoeffizient signifikant größer ist als der fehlerbereinigte Linearkoeffizient einer linear steigenden Funktion einer unverstopften Durchflussmessanordnung.

In einer alternativen Ausgestaltung der Erfindung ist die monoton steigende bzw. fallende Relation zwischen dem Differenzdruckmesssignal und dem charakteristischen Parameter näherungsweise durch eine quadratisch steigende bzw. fallende Funktion modelliert, wobei die signifikant stärker monoton steigende Relation, eine näherungsweise quadratisch steigende Funktion ist, deren Koeffizient des quadratischen Glieds signifikant größer ist als der fehlerbereinigte Koeffizient des quadratischen Glieds einer quadratisch steigenden Funktion einer unverstopften Durchflussmessanordnung.

Die Aufgabe der Erfindung wird ebenfalls durch ein Verfahren gelöst. Das Verfahren beinhaltet, ein Verfahren zum Überwachen einer Durchflussmessanordnung, insbesondere nach einem der vorhergehenden Ansprüche, umfassend die Verfahrensschritte: zumindest zeitweises Erfassen eines zeitlichen Verlaufs des Differenzdruckmesssignals und eines charakteristischen Parameters eines Rauschens oder einer Fluktuation des Differenzdruckmesssignals, Feststellen einer Relation zwischen dem Differenzdruckmesssignal und einem charakteristischen Parameter eines Rauschens oder einer Fluktuation des Differenzdruckmesssignals, wobei die Feststellung einer monoton fallenden Relation zwischen dem Differenzdruckmesssignal und dem charakteristischen Parameter als Hinweis auf eine verstopfte Hochdruckleitung gewertet wird, und die Feststellung einer monoton steigenden Relation zwischen dem Differenzdruckmesssignal und dem charakteristischen Parameter, dessen monoton steigende Relation signifikant stärker ist als die monoton steigende Relation zwischen dem Differenzdruckmesssignal (22) und dem charakteristischen Parameter bei einer unverstopften Durchflussmessanordnung, als Hinweis auf eine verstopfte Niederdruckleitung gewertet wird.

Die Erfindung wird anhand der nachfolgenden Zeichnungen näher erläutert.

Es zeigt:
Fig. 1: einen skizzierten Längsschnitt einer erfindungsgemäßen Durchflussmessanordnung,
Fig. 2a: eine graphische Darstellung des Differenzdruckmesssignals als Funktion der Zeit bei einer unverstopften Durchflussmessanordnung,
Fig. 2b: eine graphische Darstellung des Differenzdruckmesssignals als Funktion der Zeit bei einer verstopften Niederdruckleitung,
Fig. 2c: eine graphische Darstellung des Differenzdruckmesssignals als Funktion der Zeit bei einer verstopften Hochdruckleitung, und
Fig. 3: eine graphische Darstellung der Fluktuation bzw. Rauschen des Differenzdruckmesssignals als Funktion des Differenzdruckmesssignals bei mehreren Zuständen.

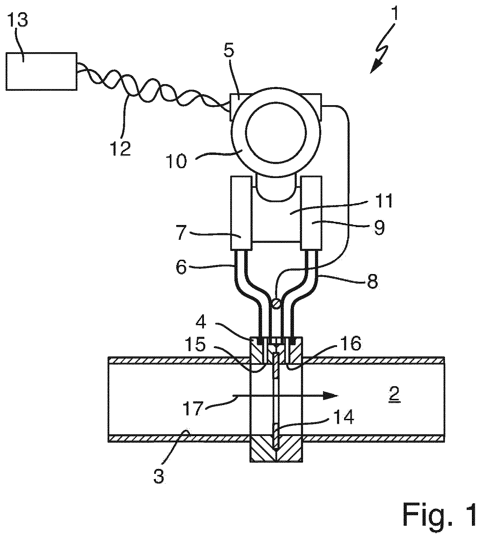

Fig. 1 zeigt ein Ausführungsbeispiel einer erfindungsgemäßen Durchflussmessanordnung 1, umfassend einen Differenzdruckmessumformer 5. Der Differenzdruckmessumformer 5 weist eine Auswerteeinheit 10 auf, die als Elektronikmodul ausgestaltet ist. Der Differenzdruckmessumformer 5 misst einen Differenzdruck zwischen einem Hochdruckeingang 7 und einem Niederdruckeingang 9 des Differenzdruckmessumformers 5, wobei der Hochdruckeingang 7 bzw. der Niederdruckeingang 9 als hochdruckseitigen Prozessanschlussflansch bzw. niederdruckseitigen Prozessanschlussflansch ausgestaltet sind.

Ferner weist der Differenzdruckmessumformer 5 ein Sensormodul 11 auf, das die Auswerteeinheit 10 hält. Signale des Sensormoduls 11 werden von der Auswerteeinheit 10 verarbeitet. Die Auswerteeinheit 10 ist über eine Zweidrahtleitung 12 an ein Prozessleitsystem 13 angeschlossen, wobei die Auswerteeinheit 10 über die Zweidrahtleitung 12 kommuniziert und mit Energie versorgt wird. Die Zweidrahtleitung 12 kann insbesondere als Feldbus nach dem Profibus- bzw. Foundation Fieldbus-Standard oder nach dem HART-Standard betrieben werden. Derartige Differenzdruckmessumformer sind an sich bekannt und werden beispielsweise unter der Marke Deltabar von der Anmelderin hergestellt und in Verkehr gebracht.

Die Durchflussmessanordnung 5 umfasst weiterhin einen Wirkdruckgeber 4 zum Einbau in ein Messrohr 3. Der Wirkdruckgeber 4 umfasst eine Blende 14, einen hochdruckseitigen Druckabgriffkanal 15 auf einer Hochdruckseite der Blende 14 und einen niederdruckseitigen Druckabgriffkanal 16 auf einer Niederdruckseite der Blende 14. Der Hochdruckeingang 7 ist über eine Hochdruckleitung 6 an den hochdruckseitigen Druckabgriffkanal 15 angeschlossen, und der Niederdruckeingang 9 ist über eine Niederdruckleitung 8 an den niederdruckseitigen Druckabgriffkanal 16 angeschlossen. Die Begriffe "hochdruckseitig" und "niederdruckseitig" beziehen sich auf eine durch einen Durchfluss (in der Zeichnung von links nach rechts) erzeugte Druckdifferenz 17, wobei diese proportional zum Quadrat der Durchflussgeschwindigkeit ist und beispielsweise in der Größenordnung von einigen 10 bis 100 mbar beträgt.

Der statische Druck, dem diese durchflussabhängige Druckdifferenz überlagert ist, kann beispielsweise von 1 bar bis zu einigen 100 bar betragen. Die Druckdifferenz wird mit einem Sensorelement des Sensormoduls 11 erfasst, wobei das Sensormodul 11 ein von der erfassten Druckdifferenz abhängiges Sensormodulsignal an die Auswerteeinheit 10 ausgibt, wobei die Verarbeitungsschaltung der Auswerteeinheit 10 anhand des Sensormodulsignals ein die Druckdifferenz repräsentierendes Differenzdruckmesssignal generiert und über die Zweidrahtleitung 12 an das Prozessleitsystem 13 ausgibt.

Zeitreihen des Differenzdruckmesssignals und/oder von Fluktuationen des Differenzdruckmesssignals können in einem Datenspeicher der Auswerteeinheit 10 und/oder im Prozessleitsystem 13 gespeichert werden.

Grundsätzlich ist davon auszugehen, dass Fluktuationen bzw. Rauschen des Drucks in einem strömenden Medium mit zunehmender Fließgeschwindigkeit des Mediums größer werden. Bei einer intakten Durchflussmessanordnung werden diese Fluktuationen aber über die Hoch- und Niederdruckleitung zum Differenzdruckmessumformer gelangen, und sich dort gegenseitig zu einem gewissen Grad kompensieren.

Wenn nun die Hoch- oder Niederdruckleitung verstopft, wird mit der Zeit diese Kompensation schwächer werden, so dass die Fluktuationen bzw. das Rauschen des Differenzdruckmesssignals ab- oder zunehmen. Hierbei geht es insbesondere um Fluktuationen in einem Frequenzbereich von mehr als 1 Hz, insbesondere mehr als 10 Hz bzw. mehr als 100 Hz.

Wenn also bei einem gegebenen Durchfluss bzw. mittleren Differenzdruck die Fluktuation des Differenzdruckmesssignals im Vergleich zu Referenzdaten, die bei offenen Wirkdruckleitungen erfasst wurden, zugenommen hat, ist dies ein erstes Indiz für eine ganz oder teilweise verstopfte Hoch- oder Niederdruckleitung.

Die Erfindung trägt nun dazu bei, Fehldiagnosen einer verstopften Hoch- oder Niederdruckleitung aufgrund zu- oder abnehmender Fluktuationen des Differenzdruckmesssignals zu vermeiden.

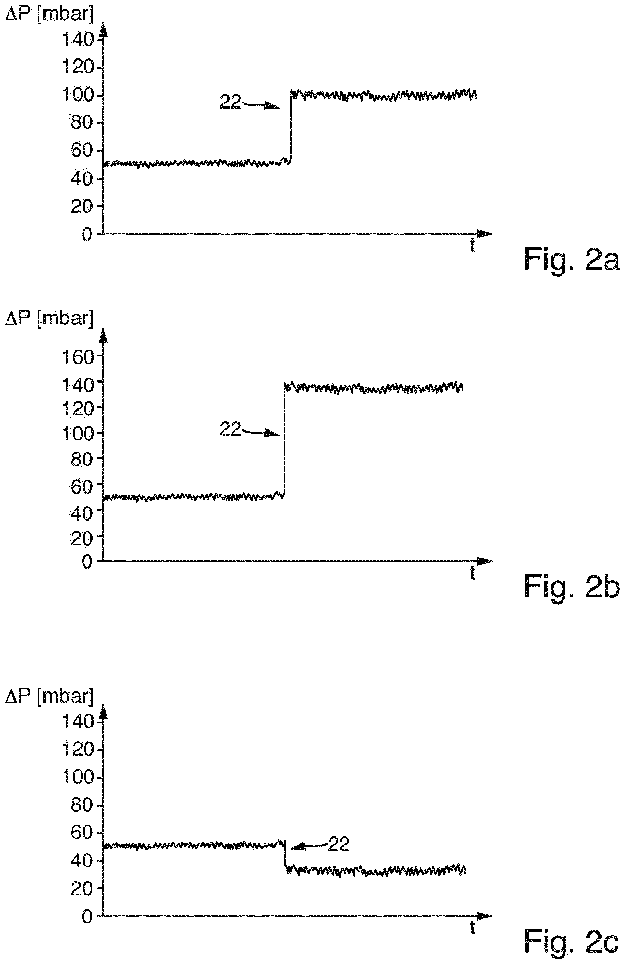

Fig. 2a zeigt eine graphische Darstellung, in welcher das Differenzdruckmesssignal 22 des Differenzdrucks Δp in mbar als Funktion der Zeit für eine unverstopfte Durchflussmessanordnung dargestellt ist. Ungefähr zu einem mittleren Zeitpunkt wird der Durchfluss in dem Messrohr 3 von 0,7 m³ pro Stunde auf 1 m³ pro Stunde angehoben. Dies resultiert in eine Änderung des Differenzdruckmesssignals 22 des Differenzdrucks Δp zwischen der Hoch- und Niederdruckseite des Wirkgebers. Das Differenzdruckmesssignal 22 des Differenzdrucks Δp steigt in diesem Fall von ca. 50 mbar auf ca. 100 mbar. Deutlich zu erkennen ist, dass das Rauschen bzw. die Fluktuation σ des Differenzdruckmesssignals 22 des Differenzdrucks Δp nach der Verdoppelung, ebenfalls verdoppelt ist.

Fig. 2b zeigt eine weitere graphische Darstellung, bei welcher das Differenzdruckmesssignal 22 des Differenzdrucks Δp in mbar als Funktion der Zeit für eine verstopfte Niederdruckleitung dargestellt ist. Ungefähr zum gleichen Zeitpunkt wie in Fig. 2a, wurde der Durchfluss in dem Messrohr 3 von ca. 0,7 m³ pro Stunde auf ca. 1 m³ pro Stunde angehoben. Deutlich zu erkennen ist, dass bei einer Verdoppelung des Rauschens bzw. der Fluktuation σ, das Differenzdruckmesssignal 22 des Differenzdrucks Δp von ca. 50 mbar auf fast 140 mbar verdoppelt ist. Dies ist eine Steigerung des Differenzdruckmesssignals 22 des Differenzdrucks Δp um beinahe das dreifache. Daraus lässt sich ableiten, dass bei einer verstopften Niederdruckleitung eine Erhöhung des Rauschens bzw. der Fluktuation σ mit einer signifikant größeren Erhöhung des Differenzdruckmesssignals 22 des Differenzdrucks Δp einhergeht.

Fig. 2c zeigt eine weitere graphische Darstellung, bei welcher das Differenzdruckmesssignal 22 des Differenzdrucks Δp in mbar als Funktion der Zeit für eine verstopfte Hochdruckleitung dargestellt ist. Auch hier wurde ungefähr zum gleichen Zeitpunkt wie in Fig. 2a bzw. Fig. 2c, der Durchfluss in dem Messrohr 3 von ca. 0,7 m³ pro Stunde auf ca. 1 m³ pro Stunde angehoben. Deutlich zu erkennen ist, dass bei einer Verdoppelung des Rauschens bzw. der Fluktuation σ, das Differenzdruckmesssignal 22 des Differenzdrucks Δp von ca. 50 mbar auf ca. 30 mbar absinkt. Dies ist eine Reduzierung des Differenzdruckmesssignals 22 des Differenzdrucks Δp um beinahe die Hälfte. Daraus lässt sich ableiten, dass bei einer verstopften Hochdruckleitung eine Erhöhung des Rauschens bzw. der Fluktuation σ mit einer Verringerung des Differenzdruckmesssignals 22 des Differenzdrucks Δp einhergeht.

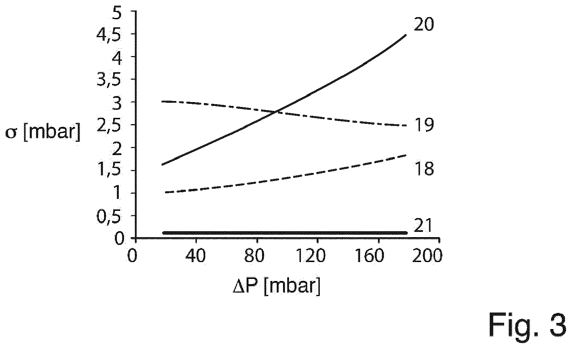

Fig. 3 zeigt eine graphische Darstellung, bei der das mittlere Rauschen bzw. die mittlere Fluktuation σ des Differenzdruckmesssignals 22 des Differenzdrucks Δp als Funktion des Differenzdruckmesssignals 22 des Differenzdrucks Δp für vier verschiedene Zustände dargestellt ist. Die Relationen aller vier Zustände sind durch lineare Funktionen 18, 19, 20, 21 modelliert.

Jede lineare Funktion beschreibt einen Zustand der Hochdruckleitung und der Niederdruckleitung. Diese vier Zustände sind: Hochdruckleitung und Niederdruckleitung offen (Funktion 18), Hochdruckleitung verstopft und Niederdruckleitung offen (Funktion 19), Hochdruckleitung offen und Niederdruckleitung verstopft (Funktion 20), Hochdruckleitung und Niederdruckleitung verstopft (Funktion 21).

Deutlich zu sehen ist, dass die Funktion 19 des Zustands "Hochdruckleitung verstopft und Niederdruckleitung offen" einen negativen Linearkoeffizienten (-0,003) aufweist. Des Weiteren weist die Funktion 20 mit dem Zustand "Hochdruckleitung offen und Niederdruckleitung verstopft" einen Linearkoeffizienten (+0,012) auf, der signifikant größer ist als der Linearkoeffizient der Funktion 18 (+0,003) mit dem Zustand "Hochdruckleitung und Niederdruckleitung offen". Der Linearkoeffizient der Funktion 20 ist ca. vier Mal größer als der Linearkoeffizient der Funktion 18. Die Funktion 21, bei dem sowohl die Hochdruckleitung als auch die Niederdruckleitung verstopft ist, weist einen Linearkoeffizienten von Null auf. Folglich lassen sich sämtliche Zustände anhand ihrer charakteristischen Linearkoeffizienten erkennen.

### Bezugszeichenliste

- 1: Durchflussmessanordnung
- 2: Medium
- 3: Messrohr
- 4: Wirkdruckgeber
- 5: Differenzdruckmesswandler
- 6: Hochdruckleitung
- 7: Hochdruckeingang
- 8: Niederdruckleitung
- 9: Niederdruckeingang
- 10: Auswerteeinheit
- 11: Sensormodul
- 12: Zweidrahtleitung
- 13: Prozessleitsystem
- 14: Blende
- 15: hochdruckseitiger Druckabgriffkanal
- 16: niederdruckseitiger Druckabgriffkanal
- 17: Druckdifferenz
- 18: Hochdruckleitung und Niederdruckleitung offen
- 19: Hochdruckleitung verstopft und Niederdruckleitung offen
- 20: Hochdruckleitung offen und Niederdruckleitung verstopft
- 21: Hochdruckleitung und Niederdruckleitung verstopft
- 22: Differenzdruckmesssignal

## Patentansprüche

1. Durchflussmessanordnung zur Messung eines Durchflusses eines Mediums (2) durch ein Messrohr (3), umfassend mindestens einen im Messrohr (3) befindlichen Wirkdruckgeber (4), der insbesondere eine Reduzierung einer vom Medium (2) durchströmten Querschnittsfläche im Inneren des Messrohrs (1) im Bereich des Wirkdruckgebers (4) und damit ein von den Abmessungen des Wirkdruckgebers (4) und vom Durchfluss abhängiges Gefälle des Mediendrucks bewirkt, umfassend:
einen Differenzdruckmesswandler (5) zum Erfassen einer Differenz zwischen einem hochdruckseitigen Mediendruck und einem niederdruckseitigen Mediendruck und zum Bereitstellen eines Differenzdruckmesssignals (22), welches von der Differenz zwischen dem hochdruckseitigen Mediendruck und dem niederdruckseitigen Mediendruck abhängt, wobei die Differenz zwischen dem hochdruckseitigen Mediendruck und dem niederdruckseitigen Mediendruck ein Maß für den Durchfluss des Mediums (2) ist,
eine Hochdruckleitung (6), welche an einen Hochdruckeingang (7) des Differenzdruckmesswandlers (5) angeschlossen ist, um den Differenzdruckmesswandler (5) mit dem hochdruckseitigen Mediendruck zu beaufschlagen,
eine Niederdruckleitung (8), welche an einen Niederdruckeingang (9) des Differenzdruckmesswandlers (5) angeschlossen ist um den Differenzdruckmesswandler (5) mit dem niederdruckseitigen Mediendruck zu beaufschlagen,
eine Auswerteeinheit (10) zum Auswerten des Differenzdruckmesssignals (22), wobei die Auswerteeinheit (10) dazu eingerichtet ist,
eine Relation zwischen dem Differenzdruckmesssignal (22) und einem charakteristischen Parameter eines Rauschens oder einer Fluktuation des Differenzdruckmesssignals (22) festzustellen, **gekennzeichnet dadurch, dass**
- die Feststellung einer monoton fallenden Relation zwischen dem Differenzdruckmesssignal (22) und dem charakteristischen Parameter als Hinweis auf eine verstopfte Hochdruckleitung (6) gewertet wird, und
- die Feststellung einer monoton steigenden Relation zwischen dem Differenzdruckmesssignal (22) und dem charakteristischen Parameter, dessen monoton steigende Relation signifikant stärker ist als die monoton steigende Relation zwischen dem Differenzdruckmesssignal und dem charakteristischen Parameter des Rauschens bei einer unverstopften Durchflussmessanordnung, als Hinweis auf eine verstopfte Niederdruckleitung (8) gewertet wird.

2. Durchflussmessanordnung nach Anspruch 1, wobei die monoton steigende bzw. fallende Relation zwischen dem Differenzdruckmesssignal (22) und dem charakteristischen Parameter näherungsweise durch eine linear steigende bzw. fallende Funktion modelliert ist, und wobei die signifikant stärker monoton steigende Relation, eine näherungsweise linear steigende Funktion ist, deren Linearkoeffizient signifikant größer ist als der fehlerbereinigte Linearkoeffizient einer linear steigenden Funktion einer unverstopften Durchflussmessanordnung.

3. Durchflussmessanordnung nach Anspruch 1 oder 2, wobei die monoton steigende bzw. fallende Relation zwischen dem Differenzdruckmesssignal (22) und dem charakteristischen Parameter näherungsweise durch eine quadratisch steigende bzw. fallende Funktion modelliert ist, und wobei die signifikant stärker monoton steigende Relation, eine näherungsweise quadratisch steigende Funktion ist, deren Koeffizient des quadratischen Glieds signifikant größer ist als der fehlerbereinigte Koeffizient des quadratischen Glieds einer quadratisch steigenden Funktion einer unverstopften Durchflussmessanordnung.

4. Verfahren zum Überwachen einer Durchflussmessanordnung, insbesondere nach einem der vorhergehenden Ansprüche, umfassend die Verfahrensschritte:
zumindest zeitweises Erfassen eines zeitlichen Verlaufs des Differenzdruckmesssignals (22) und eines charakteristischen Parameters eines Rauschens oder einer Fluktuation des Differenzdruckmesssignals (22),
Feststellen einer Relation zwischen dem Differenzdruckmesssignal (22) und einem charakteristischen Parameter eines Rauschens oder einer Fluktuation des Differenzdruckmesssignals (22),
**gekennzeichnet dadurch, dass** die Feststellung einer monoton fallenden Relation zwischen dem Differenzdruckmesssignal (22) und dem charakteristischen Parameter als Hinweis auf eine verstopfte Hochdruckleitung (6) gewertet wird, und
die Feststellung einer monoton steigenden Relation zwischen dem Differenzdruckmesssignal (22) und dem charakteristischen Parameter, dessen monoton steigende Relation signifikant stärker ist als die monoton steigende Relation zwischen dem Differenzdruckmesssignal und dem charakteristischen Parameter des Rauschens bei einer unverstopften Durchflussmessanordnung, als Hinweis auf eine verstopfte Niederdruckleitung (8) gewertet wird.

## Claims

1. Flow measurement arrangement designed to measure a flow of a medium (2) through a measuring tube (3), comprising at least a differential pressure sensor (4) located in the measuring tube (3), said sensor particularly causing a reduction in the cross-sectional area, through which the medium (2) flows, inside the measuring tube (1) in the area of the differential pressure sensor (4) and, therefore, a medium pressure gradient that depends on the dimensions of the differential pressure sensor (4) and the flow, said measurement arrangement comprising:
a differential pressure transducer (5) designed to measure a difference between a medium pressure on the high-pressure side and a medium pressure on the low-pressure side and to provide a differential pressure measuring signal (22) which depends on the difference between the medium pressure on the high-pressure side and the medium pressure on the low-pressure side, wherein the difference between the medium pressure on the high-pressure side and the medium pressure on the low-pressure side is an indicator for the flow of the medium (2),
a high-pressure pipe (6), which is connected to a high-pressure inlet (7) of the differential pressure transducer (5) in order to subject the differential pressure transducer (5) to the medium pressure on the high-pressure side,
a low-pressure pipe (8), which is connected to a low-pressure inlet (9) of the differential pressure transducer (5) in order to subject the differential pressure transducer (5) to the medium pressure on the low-pressure side,
an evaluation unit (10) designed to evaluate the differential pressure measuring signal (22), wherein the evaluation unit (10) is designed to determine a relation between the differential pressure measuring signal (22) and a characteristic parameter of a noise or a fluctuation of the differential pressure measuring signal (22),
**characterized in that**
- the determination of a monotonically decreasing relationship between the differential pressure measuring signal (22) and the characteristic parameter is assessed as an indication of a blocked high-pressure pipe (6), and
- the determination of a monotonically increasing relationship between the differential pressure measuring signal (22) and the characteristic parameter, whose monotonically increasing relationship is significantly greater than the monotonically increasing relationship between the differential pressure measuring signal and the characteristic parameter of the noise when the measuring arrangement is not blocked, is assessed as an indication of a blocked low-pressure pipe (8).

2. Flow measurement arrangement as claimed in Claim 1, wherein the monotonically increasing or decreasing relationship between the differential pressure measuring signal (22) and the characteristic parameter is approximately modelled by a linearly increasing or decreasing function, and wherein the significantly more monotonically increasing relationship is an approximately linearly increasing function whose linear coefficient is significantly greater than the linear coefficient, corrected of errors, of a linearly increasing function of an unblocked flow measurement arrangement.

3. Flow measurement arrangement as claimed in Claim 1 or 2, wherein the monotonically increasing or decreasing relationship between the differential pressure measuring signal (22) and the characteristic parameter is approximately modelled by a quadratically increasing or decreasing function, and wherein the significantly more monotonically increasing relationship is an approximately quadratically increasing function whose coefficient of the quadratic element is significantly greater than the coefficient, corrected of errors, of the quadratic element of a quadratically increasing function of an unblocked flow measurement arrangement.

4. Procedure to monitor a flow measurement arrangement, particularly as claimed in one of the previous claims, comprising the following procedural steps:
At least temporary detection of a pattern, over time, of the differential pressure measuring signal (22) and of a characteristic parameter of a noise or a fluctuation of the differential pressure measuring signal (22),
Determination of a relation between the differential pressure measuring signal (22) and a characteristic parameter of a noise or a fluctuation of the differential pressure measuring signal (22),
**characterized in that** the determination of a monotonically decreasing relationship between the differential pressure measuring signal (22) and the characteristic parameter is assessed as an indication of a blocked high-pressure pipe (6), and
the determination of a monotonically increasing relationship between the differential pressure measuring signal (22) and the characteristic parameter, whose monotonically increasing relationship is significantly greater than the monotonically increasing relationship between the differential pressure measuring signal and the characteristic parameter of the noise in the case of an unblocked flow measurement arrangement, is assessed as an indication of a blocked low-pressure pipe (8).

## Revendications

1. Dispositif de mesure de débit destiné à la mesure d'un débit d'un produit (2) à travers un tube de mesure (3), comprenant au moins un capteur de pression différentielle (4) se trouvant dans le tube de mesure (3), lequel capteur provoque notamment une réduction de la section transversale parcourue par le produit (2) à l'intérieur du tube de mesure (1) dans la zone du capteur de pression différentielle (4) et, par conséquent, un gradient de la pression du produit qui dépend des dimensions du capteur de pression différentielle (4) et du débit, lequel dispositif de mesure comprend :
un transducteur de pression différentielle (5) destiné à mesurer une différence entre une pression de produit côté haute pression et une pression de produit côté basse pression et à fournir un signal de mesure de pression différentielle (22) qui dépend de la différence entre la pression de produit côté haute pression et la pression de produit côté basse pression, la différence entre la pression de produit côté haute pression et la pression de produit côté basse pression étant une mesure du débit du produit (2),
une conduite haute pression (6), laquelle est reliée à une entrée haute pression (7) du transducteur de pression différentielle (5), afin de soumettre le transducteur de pression différentielle (5) à la pression du produit côté haute pression,
une conduite basse pression (8), laquelle est reliée à une entrée basse pression (9) du transducteur de pression différentielle (5), afin de soumettre le transducteur de pression différentielle (5) à la pression du produit côté basse pression,
une unité d'évaluation (10) destinée à évaluer le signal de mesure de pression différentielle (22), l'unité d'évaluation (10) étant conçue pour déterminer une relation entre le signal de mesure de pression différentielle (22) et un paramètre caractéristique d'un bruit ou d'une fluctuation du signal de mesure de pression différentielle (22),
**caractérisé en ce que**
- la détermination d'une relation monotone décroissante entre le signal de mesure de pression différentielle (22) et le paramètre caractéristique est évaluée comme une indication d'une conduite haute pression (6) colmatée, et
- la détermination d'une relation monotone croissante entre le signal de mesure de pression différentielle (22) et le paramètre caractéristique, dont la relation monotone croissante est significativement plus forte que la relation monotone croissante entre le signal de mesure de pression différentielle et le paramètre caractéristique du bruit dans le cas d'un dispositif de mesure du débit non colmaté, est évaluée comme une indication d'une conduite basse pression (8) colmatée.

2. Dispositif de mesure de débit selon la revendication 1, pour lequel la relation monotone croissante ou décroissante entre le signal de mesure de pression différentielle (22) et le paramètre caractéristique est approximativement modélisée par une fonction linéairement croissante ou décroissante, et pour lequel la relation significativement plus monotone croissante est une fonction approximativement linéairement croissante dont le coefficient linéaire est significativement plus grand que le coefficient linéaire corrigé des erreurs d'une fonction linéairement croissante d'un dispositif de mesure de débit non colmaté.

3. Dispositif de mesure de débit selon la revendication 1 ou 2, pour lequel la relation monotone croissante ou décroissante entre le signal de mesure de pression différentielle (22) et le paramètre caractéristique est approximativement modélisée par une fonction quadratique croissante ou décroissante, et pour lequel la relation significativement plus monotone croissante est une fonction à croissance approximativement quadratique dont le coefficient de l'élément quadratique est significativement plus grand que le coefficient corrigé des erreurs de l'élément quadratique d'une fonction à croissance quadratique d'un dispositif de mesure de débit non colmaté.

4. Procédé de surveillance d'un dispositif de mesure de débit, notamment selon l'une des revendications précédentes, comprenant les étapes de procédé suivantes :
Détection au moins temporaire d'une évolution dans le temps du signal de mesure de pression différentielle (22) et d'un paramètre caractéristique d'un bruit ou d'une fluctuation du signal de mesure de pression différentielle (22),
Détermination d'une relation entre le signal de mesure de pression différentielle (22) et un paramètre caractéristique d'un bruit ou d'une fluctuation du signal de mesure de pression différentielle (22),
**caractérisé en ce que** la détermination d'une relation monotone décroissante entre le signal de mesure de pression différentielle (22) et le paramètre caractéristique est évaluée comme une indication d'une conduite haute pression (6) colmatée, et
la détermination d'une relation monotone croissante entre le signal de mesure de pression différentielle (22) et le paramètre caractéristique, dont la relation monotone croissante est significativement plus forte que la relation monotone croissante entre le signal de mesure de pression différentielle et le paramètre caractéristique du bruit dans le cas d'un dispositif de mesure de débit non colmaté, est évaluée comme une indication d'une conduite basse pression (8) colmatée.
